# EUROPEAN PATENT APPLICATION

(11) **EP 4 283 082 A1**
(43) Date of publication of application: **29.11.2023**
(21) Application number: 23172101.0
(22) Date of filing: 08.05.2023
(51) Int. Cl.: E05D 3/18, E05D 3/16, A47B 3/00

(54) **HINGE DEVICE**

(30) Priority: 26.05.2022 CN 202221283118 U
(71) Applicant: Nisco Co., Ltd., Rugao, Jiangsu (CN)
(72) Inventor: REN, Zhong, Rugao (CN); ZHENG, Lide, Rugao (CN); XIE, Jian, Rugao (CN)
(74) Representative: Weickmann & Weickmann PartmbB

(57) **Abstract**

A hinge device for hinging two objects includes first and second hinging bodies configured to respectively connect to the two objects. Each of the first and second hinging bodies has a housing defined therein. The hinge device also includes first and second connection members placed in the housings of the first and second hinging bodies. The first and second ends of each first connection member are bent from the body. The first and second hinging bodies are pivotally connected to each other through the first connection members and the second connection members, such that the first hinging body and the second hinging body are rotatable relative to each other, thereby hinging the two objects.

## Description

### CROSS-REFERENCE TO RELATED PATENT APPLICATION

This application also claims priority to and the benefit of Chinese Patent Application No. 202221283118.6, filed May 26, 2022, which is incorporated herein in its entirety by reference.

### FIELD OF THE INVENTION

The invention relates to a hinge device usable in furniture such as foldable beds and foldable tables and desks.

### BACKGROUND OF THE INVENTION

A hinge is a device mainly used to hinge doors, windows or panels. Traditional hinges are formed of two hinging bodies hinged to each other, typically allowing only a limited angle of rotation between them, which often does not exceed 120°.

However, there are many application scenarios that require the rotation angle of two hinged objects be in a range of 0-180°. For example, in furniture, particularly foldable beds, or foldable tables and desks, two broads or frames are hinged to each other so that the hinged broads or frames can be rotated in a foldable state in which the relative angle of the hinged broads or frames is 0°, which is convenience for transportation and storage of the furniture, or in a flat state in which the relative angle of the hinged broads or frames is 180° when the furniture is in use.

Therefore, a heretofore unaddressed need exists in the art to address the aforementioned deficiencies and inadequacies.

### SUMMARY OF THE INVENTION

In one aspect, the invention relates to a hinge device for hinging a first object and a second object. The hinge device includes a first hinging body and a second hinging body configured to connect to the first object and the second object, respectively. Each of the first hinging body and the second hinging body has a housing defined therein.

The hinge device also includes a plurality of first connection members placed in the housings of the first hinging body and the second hinging body. Each first connection member has a first end, a second end, and a body defined therebetween, wherein the first end and the second end are bent from the body.

The hinge device further includes a plurality of second connection members placed in the housings of the first hinging body and the second hinging body. Each second connection member has a first end, a second end, and a body defined therebetween.

The first hinging body and the second hinging body are pivotally connected to each other through the plurality of first connection members and the plurality of second connection members, such that the first hinging body and the second hinging body are rotatable relative to each other, thereby hinging the first object and the second object.

In one embodiment, the plurality of first connection members comprises two first connection members, and the plurality of second connection members comprises two second connection members. Said two first connection members are pivotally connected to each other side by side through the bodies of said two first connection members such that the first end and the second end of one of said two first connection members are respectively aligned with the second end and the first end of the other of said two first connection members. The first ends of said two first connection members are pivotally connected to the first hinging body and the second hinging body, respectively. The first ends of said two second connection members are pivotally connected to the second ends of said two first connection members, respectively, the second ends of said two second connection members are pivotally connected to the first hinging body and the second hinging body, respectively.

In one embodiment, the plurality of first connection members comprises three first connection members, and the plurality of second connection members comprises three second connection members. Said three first connection members are pivotally connected to each other side by side through the bodies of said three first connection members such that the first end and the second end of the middle first connection member are respectively aligned with the second ends and the first ends of the two outer first connection members. The first end of the middle outer first connection member is pivotally connected to the first hinging body, and the first ends of the two outer first connection members are pivotally connected to the second hinging body. The first end of one of said three second connection members is pivotally connected between the first ends of the two outer first connection members, the second end of the one of said three second connection members is pivotally connected to the first hinging body, the second end of the middle first connection member is pivotally connected between the first ends of the two outer second connection members, and the second ends of the two outer second connection members are pivotally connected to the second hinging body.

In one embodiment, each of the first end, the second end, and the body of each first connection member has a through hole defined therein, wherein each of the first end and the second end of each second connection member has a through hole defined therein.

In one embodiment, the pivotal connections between the first hinging body, the second hinging body, the plurality of first connection members, and the plurality of second connection members through the connection pins are through a plurality of connection pins placing through corresponding holes defined therein.

In one embodiment, the hinge device further includes a plurality of cylindrical washers 130 placed between the first hinging body, the second hinging body, the plurality of first connection members, and the plurality of second connection members through the connection pins.

In one embodiment, each of the first end and the second end of each of the first connection members and the second connection members has an arc-shape surface.

In one embodiment, the first end and the second end of each first connection member have different heights relative to the body, wherein the first end is higher than the second end.

In another aspect, the invention relates to a hinge device for hinging a first object and a second object. The hinge device includes a first hinging body and a second hinging body configured to connect to the first object and the second object, respectively, wherein each of the first hinging body and the second hinging body has a housing defined therein.

The hinge device also includes a first connection member having a shoulder and a first bending arm vertically extending from a middle of the shoulder to form a T-shape connection piece, wherein the shoulder is placed in the housing of the first hinging body and is pivotally connected to the first hinging body, and the free end of the first bending arm is placed in the housing of the second hinging body.

The hinge device further includes a second connection member having a shoulder and a pair of second bending arms vertically extending from two opposite ends of the shoulder to define a space therebetween, wherein the shoulder is placed in the housing of the second hinging body and is pivotally connected to the second hinging body, wherein the free ends of the pair of second bending arms is placed in the housing of the first hinging body, wherein the first bending arm is received in the space and pivotally connected to the pair of second bending arms at a middle portion so that the first bending arm and the pair of second bending arms form an X-shape structure.

The first hinging body and the second hinging body are pivotally connected to each other through the first connection member and the second connection member, such that the first hinging body and the second hinging body are rotatable relative to each other, thereby hinging the first object and the second object.

In one embodiment, each of the shoulders and the free ends of the bending arms of the first connection member and the second connection member has an arc-shape surface.

In one embodiment, each of the shoulders of the first connection member and the second connection member has a width that is substantially same as that of the housings of the first hinging body and the second hinging body.

In one embodiment, the hinge device further comprises a first position-limiting member placed in the housing of the first hinging body, and a second position-limiting memberplaced in .the housing of the second hinging body

The first position-limiting memberhas a body and a tab protruded from the body, wherein the body is pivotally connected to the first hinging body, and the tab is received in the space between the pair of second bending arms and pivotally connected to the free ends of the pair of second bending arms.

The second position-limiting memberhas a body and a notch cut from the body, wherein the body is pivotally connected to the second hinging body, and the free end of the first bending arm is received in the notch and pivotally connected the second position-limiting member .through the notch

In one embodiment, each of the first position-limiting memberand the second position-limiting member.has arc-shape surfaces

These and other aspects of the invention will become apparent from the following description of the preferred embodiment taken in conjunction with the following drawings, although variationsand modifications therein may be affected without departing from the spirit and scope of the novel concepts of the disclosure.

### BRIEF DESCRIPTION OF THE DRAWINGS

The accompanying drawings illustrate one or more embodiments of the invention and, together with the written description, serve to explain the principles of the invention. Wherever possible, the same reference numbers are used throughout the drawings to refer to the same or like elements of an embodiment.
FIG. 1 shows schematically a perspective view of a hinge device according to one embodiment of the invention.
FIGS. 2A-2D show schematically members/components of the hinge device shown in FIG. 1.
FIG. 3A shows schematically one partial perspective view of the hinge device shown in FIG. 1.
FIG. 3B shows schematically another partial perspective view of the hinge device shown in FIG. 1.
FIG. 4 shows schematically a perspective view of the hinge device shown in FIG. 1.
FIG. 5 shows schematically a cross section view of the hinge device along with lines A-A shown in FIG. 4.
FIG. 6A shows schematically one partial perspective view of the hinge device shown in FIG. 1.
FIG. 6B shows schematically another partial perspective view of the hinge device shown in FIG. 1.
FIG. 7 shows schematically a perspective view of the hinge device shown in FIG. 1.
FIG. 8 shows schematically a perspective view of a hinge device according to another embodiment of the invention.
FIG. 9 shows schematically a cross section view of the hinge device along with lines B-B shown in FIG. 8.
FIGS. 10A-10D show schematically members/components of the hinge device shown in FIG. 8.
FIG. 11 shows schematically one partial perspective view of the hinge device shown in FIG. 8.
FIGS. 12-14 show schematically different views of a foldable table using the hinge device according to embodiments of the invention.

### DETAILED DESCRIPTION OF THE INVENTION

The invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terms used in this specification generally have their ordinary meanings in the art, within the context of the invention, and in the specific context where each term is used. Certain terms that are used to describe the invention are discussed below, or elsewhere in the specification, to provide additional guidance to the practitioner regarding the description of the invention. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that same thing can be said in more than one way. Consequently, alternative language and synonyms may be used for any one or more of the terms discussed herein, nor is any special significance to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and in no way limits the scope and meaning of the invention or of any exemplified term. Likewise, the invention is not limited to various embodiments given in this specification.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower", can therefore, encompasses both an orientation of "lower" and "upper," depending of the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

It will be understood that when an element is referred to as being "on", "attached" to, "connected" to, "coupled" with, "contacting", etc., another element, it can be directly on, attached to, connected to, coupled with or contacting the other element or intervening elements may also be present. In contrast, when an element is referred to as being, for example, "directly on", "directly attached" to, "directly connected" to, "directly coupled" with or "directly contacting" another element, there are no intervening elements present. It will also be appreciated by those of skill in the art that references to a structure or feature that is disposed "adjacent" another feature may have portions that overlap or underlie the adjacent feature.

As used herein, "around", "about", "substantially" or "approximately" shall generally mean within 20 percent, preferably within 10 percent, and more preferably within 5 percent of a given value or range. Numerical quantities given herein are approximate, meaning that the term "around", "about" "substantially" or "approximately" can be inferred if not expressly stated.

As used in this specification, the phrase "at least one of A, B, and C" should be construed to mean a logical (A or B or C), using a non-exclusive logical OR. As used herein, the term "and/or" includes any and all combinations of one or more of the associated listed items.

The description below is merely illustrative in nature and is in no way intended to limit the invention, its application, or uses. The broad teachings of the invention can be implemented in a variety of forms. Therefore, while this invention includes particular examples, the true scope of the invention should not be so limited since other modifications will become apparent upon a study of the drawings, the specification, and the following claims.

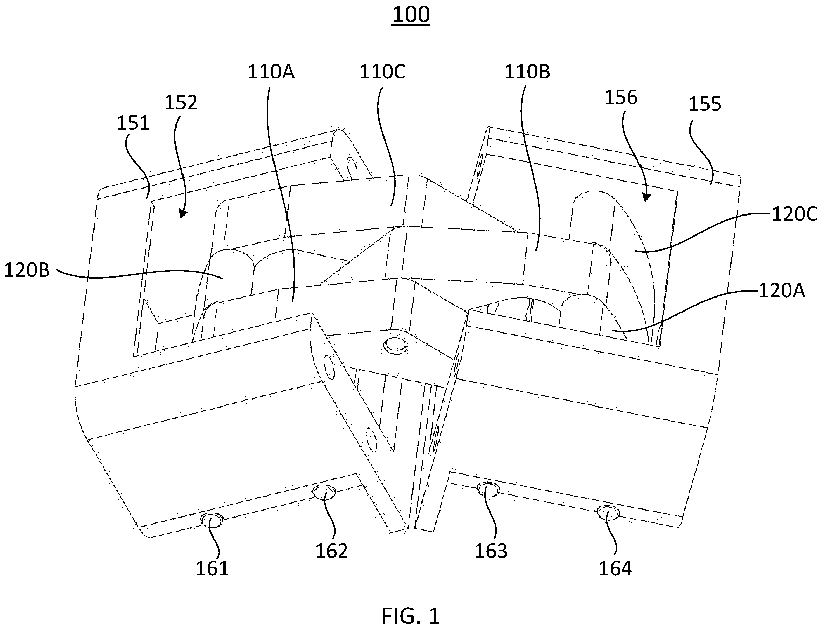

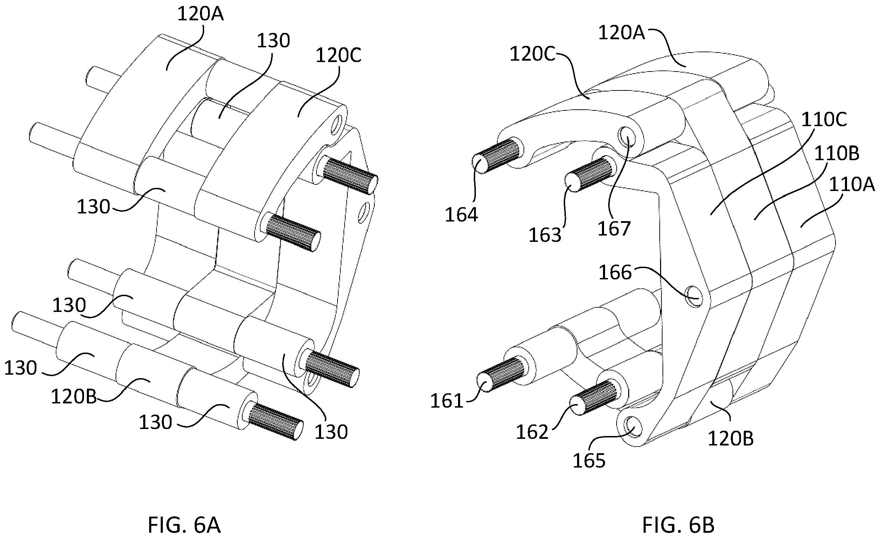

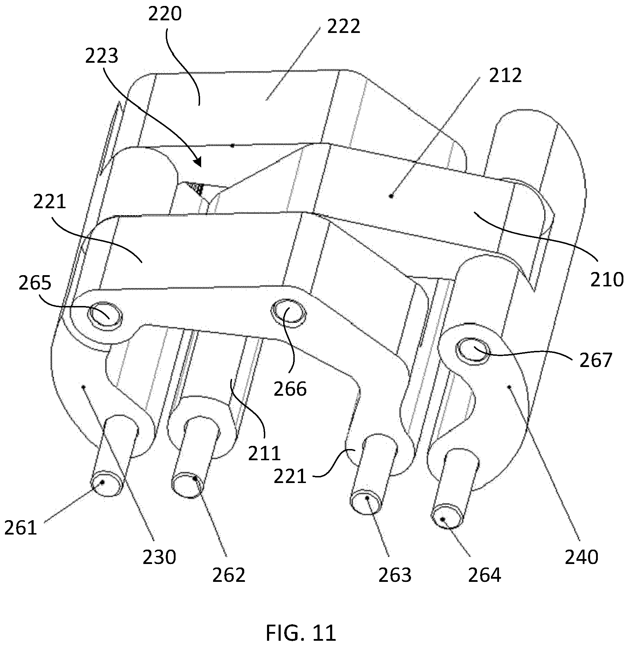

In accordance with the purposes of this invention, as embodied and broadly described herein, this invention, in one aspect, relates to a hinge device for hinging a first object and a second object. Exemplary embodiments of the invention will be described in conjunction with the accompanying drawings in FIGS. 1-14. For purposes of clarity, the same reference numbers will be used in the drawings to identify similar elements

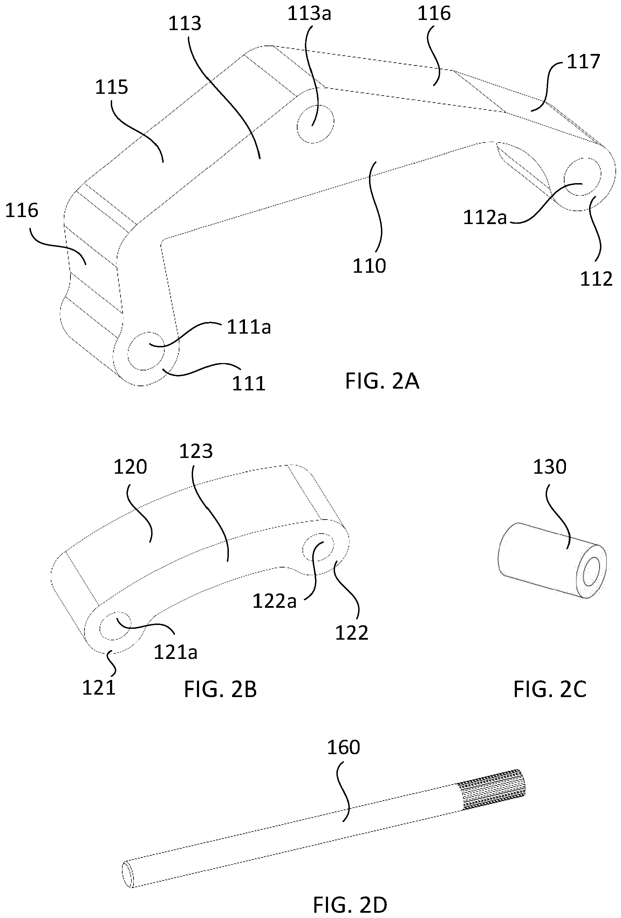

Referring to FIGS. 1-7, the hinge device 100 is shown according to one embodiment of the invention. The hinge device 100 includes a first hinging body 151 and a second hinging body 155, a plurality of first connection members 110, and a plurality of second connection members 120. It should be noted that the reference numeral 110 used hereinafter refers to a single first connection member as shown in FIG. 2A or the plurality of first connection members, while the reference numerals 110A, 110B and/or 110C used hereinafter refer to individual first connection members that are utilized in one embodiment of the hinge device 100. Each of the individual first connection members 110A, 110B and/or 110C is identical to the single first connection member 110 shown in FIG. 2A. Similarly, the reference numeral 120 used hereinafter refers to a single second connection member as shown in FIG. 2B or the plurality of second connection members, while the reference numerals 120A, 120B and/or 120C used hereinafter refer to individual second connection members that are utilized in one embodiment of the hinge device 100. Each of the individual second connection members 120A, 120B and/or 120C is identical to the single first connection member 120 shown in FIG. 2B. Also, the reference numeral 160 used hereinafter refers to a single pin (or connection pin) as shown in FIG. 2D or the plurality of pins (or connection pins), while the reference numerals 161-167 used hereinafter refer to individual pins (or connection pins) that are utilized in one embodiment of the hinge device 100. Each of the individual pins 161-167 is identical or similar to the single pin 160 shown in FIG. 2D.

The first hinging body 151 and the second hinging body 155 is configured to connect to a first object and a second object, respectively. The first hinging body 151 and the second hinging body 155 are hinged to each other through the cooperation of the plurality of first connection members 110 and the plurality of second connection members 120, thereby hinging the first object and the second object accordingly.

As shown in FIG. 1, the first hinging body 151 has a housing 152 defined therein, and the second hinging body 155 has a housing 156 defined therein. The plurality of first connection members 110A, 110B and 110C and the plurality of second connection members 120 are placed in the housings 152 and 156 of the first hinging body 151 and the second hinging body 155.

As shown in FIG. 2A, each first connection member 110 has a first end 111, a second end 112, and a body 113 defined therebetween, wherein the first end 111 and the second end 112 are bent from the body 113.

In one embodiment, each of the first end 111, the second end 112, and the body 113 of each first connection member 110 has a through hole 111a, 112a, or 113a defined therein.

In one embodiment, each of the first end and the second end of each of the first connection members 110 and the second connection members 120 has an arc-shape surface.

In one embodiment, the first end 111 and the second end 112 of each first connection member 110 have different heights relative to the body 113, wherein the first end 111 is higher than the second end 112.

As shown in FIG. 2B, each second connection member 120 has a first end 121, a second end 122, and a body 123 defined therebetween. Each of the first end 121 and the second end 122 of each second connection member 120 has a through hole 121a, or 122a defined therein.

In one embodiment, the first hinging body 151 and the second hinging body 155 are pivotally connected to each other through the plurality of first connection members 110 and the plurality of second connection members 120, such that the first hinging body 151 and the second hinging body 155 are rotatable relative to each other, thereby hinging the first object and the second object.

In one embodiment, the plurality of first connection members 110 comprises two first connection members 110A and 110B, and the plurality of second connection members 120 comprises two second connection members 120A and 120B. Said two first connection members 110A and 110B are pivotally connected to each other side by side through the bodies of said two first connection members 110A and 110B such that the first end and the second end of one of said two first connection members 110A and 110B are respectively aligned with the second end and the first end of the other of said two first connection members 110A and 110B. The first ends of said two first connection members 110A and 110B are pivotally connected to the first hinging body 151 and the second hinging body 155, respectively. The first ends of said two second connection members 120A and 120B are pivotally connected to the second ends of said two first connection members 110A and 110B, respectively, the second ends of said two second connection members 120A and 120B are pivotally connected to the first hinging body 151 and the second hinging body 155, respectively.

In another embodiment, as shown in FIGS. 1, 3A-3B, 4-5, 6A-6B and 7, the plurality of first connection members 110 comprises three first connection members 110A, 110B and 110C, and the plurality of second connection members 120 comprises three second connection members 120A, 120B, 120C.

Said three first connection members 110A, 110B and 110C are pivotally connected to each other side by side through the through holes 113a of the bodies 113 of said three first connection members 110A, 110B and 110C with a connection pin 166 such that the first end and the second end of the middle first connection member 110B are respectively aligned with the second ends and the first ends of the two outer first connection members 110A and 110C.

The first end of the middle outer first connection member 110B is pivotally connected to the first hinging body 151 through a connection pin 162.

The first ends of the two outer first connection members 110A and 110C are pivotally connected to the second hinging body 155 through a connection pin 163.

The first end of the middle second connection member 120B of said three second connection members 120A, 120B and 120C is pivotally connected between the first ends of the two outer first connection members 110A and 110C through a connection pin 165.

The second end of the middle second connection member 120B of said three second connection members 120A, 120B and 120C is pivotally connected to the first hinging body 151 through a connection pin 161.

The second end of the middle first connection member 110B is pivotally connected between the first ends of the two outer second connection members 120A and 120C through a connection pin 167.

The second ends of the two outer second connection members 120A and 120C are pivotally connected to the second hinging body 155 through a pin 164.

In one embodiment, these pivotal connections between the first hinging body 151, the second hinging body 155, the first connection members 110A, 110B and 110C, and the second connection members 120A, 120B and 120C are through the connection pins 161-167 placing through corresponding holes defined therein.

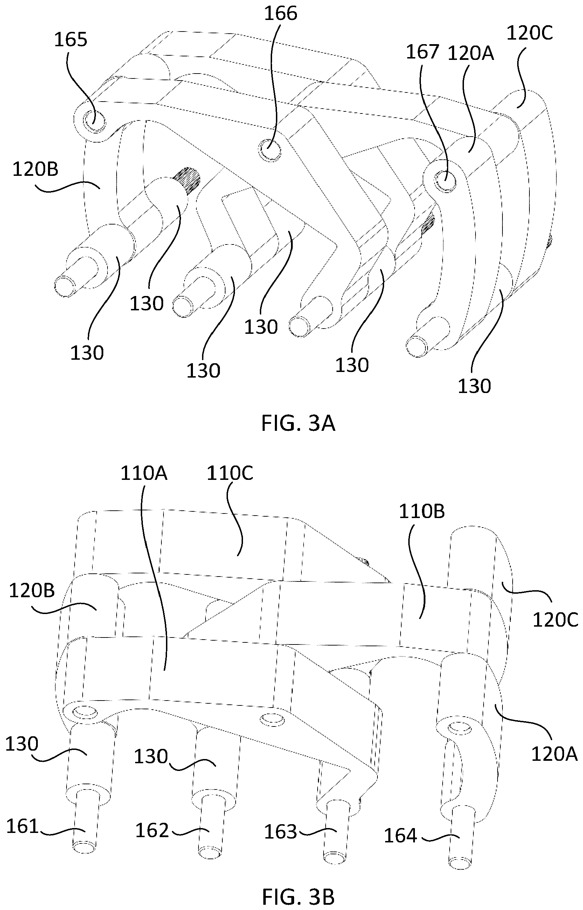

In one embodiment, the hinge device 100 further includes a plurality of cylindrical washers 130 (FIG. 2C) placed between the first hinging body 151, the second hinging body 155, the plurality of first connection members 110, and the plurality of second connection members 120 through the connection pins 160. For example, as shown in FIGS. 3A-3B, two cylindrical washers 130 are provided at two sides of the second end of the middle second connection member 120B and placed through the connection pin 161; two cylindrical washers 130 are provided at two sides of the first end of the middle first connection member 110B and placed through the connection pin 162; one cylindrical washer 130 is provided between the first ends of the two outer first connection members 110A and 110C and placed through the connection pin 163; and one cylindrical washer 130 is provided between the second ends of the two outer second connection members 120A and 120C and placed through the connection pin 164. Applications of the cylindrical washers 130 ensures the stable and smooth rotation between the first hinging body 151, the second hinging body 155, the plurality of first connection members 110, and the plurality of second connection members 120, thereby improving the stability of rotation between the two hinged objects.

In addition, each of the first connection members 110, the second connection members 120, and the washers 130 has the same width or substantially similar widths, which may further ensure the stable and smooth rotation between the two hinged objects during operation.

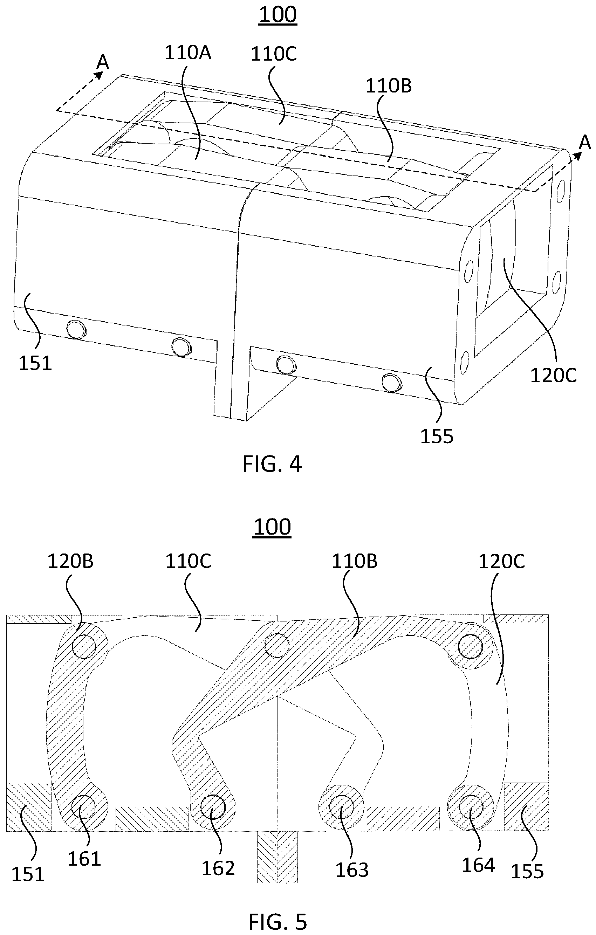

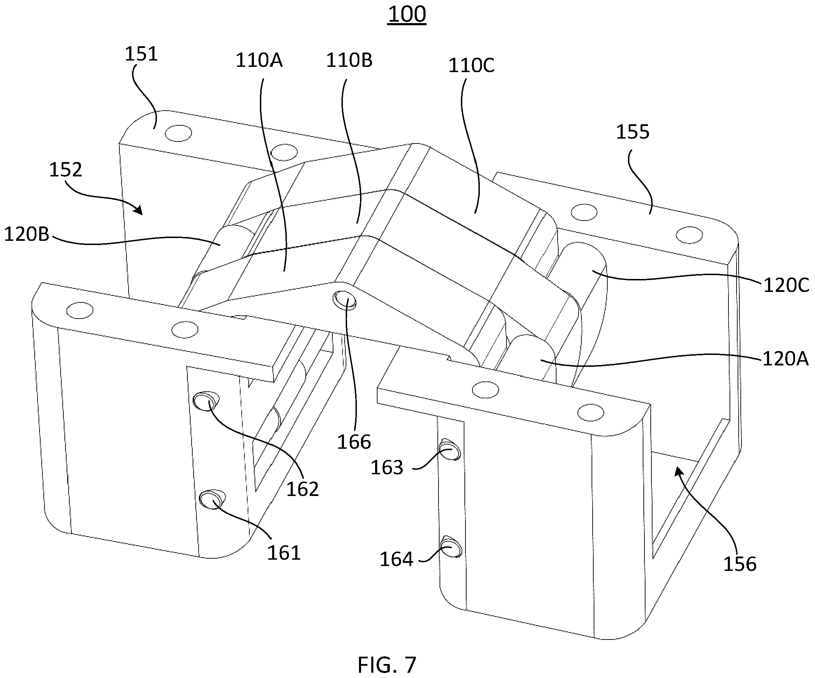

For such a hinge device 100, the two hinged objects can be rotated relatively in an angle ranging from 0° to 180°. When the hinge device 100 is in the position of FIGS. 4-5, the two hinged objects are aligned in 180° (or 0°), while the hinge device 100 is in the position of FIG. 7, the two hinged objects are aligned in 0° (or 180°), depending upon where the two hinged objects are mounted onto the hinge device 100.

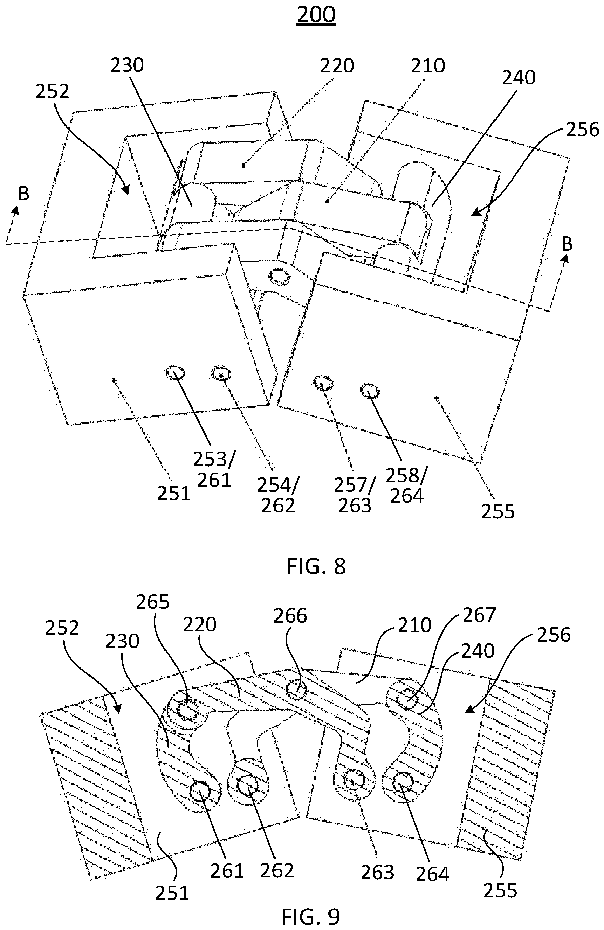

Referring to FIGS. 8-11 now, the hinge device 200 includes a first hinging body 251, a second hinging body 255, a first connection member 210, and a second connection member 220. The first hinging body 251 and the second hinging body 255 are configured to connect to the first object and the second object, respectively. Each of the first hinging body 251 and the second hinging body 255 has a housing 252 or 256 defined therein, as shown in FIGS. 8-9. The first hinging body 251 and the second hinging body 255 are received in the housings 252 and 256 of the first hinging body 251 and the second hinging body 255 and are pivotally connected to each other through the first connection member 210 and the second connection member 220, such that the first hinging body 251 and the second hinging body 255 are rotatable relative to each other, thereby hinging the first object and the second object.

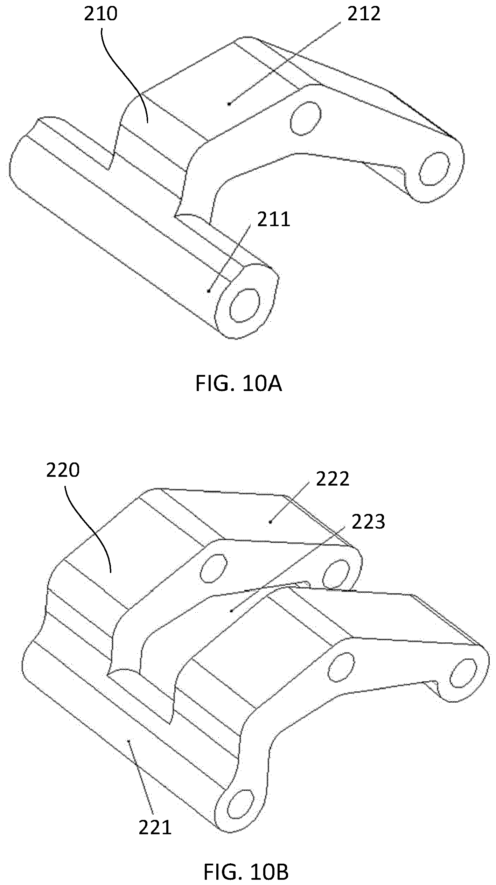

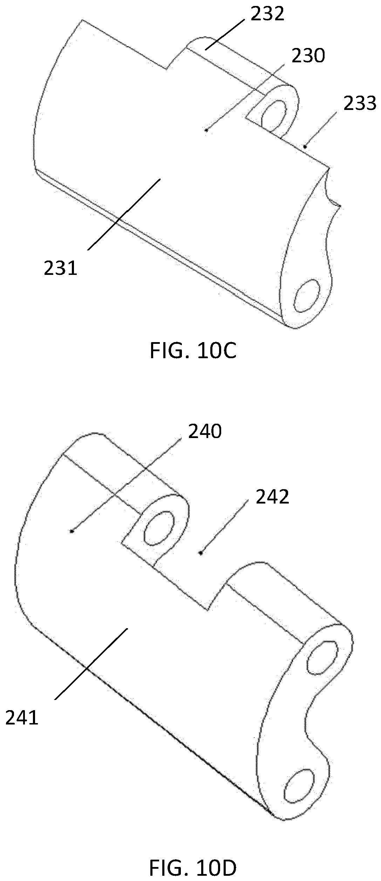

In one embodiment, the first connection member 210 has a shoulder 211 and a first bending arm 212 vertically extending from a middle of the shoulder 211 to form a T-shape connection piece, as shown in FIG. 10A. The shoulder 211 of the first connection member 210 is placed in the housing 252 of the first hinging body 251 and is pivotally connected to the first hinging body 251 through the holes 254 defined in the body 251 with a connection pin 262, and the free end of the first bending arm 212 of the first connection member 210 is placed in the housing 256 of the second hinging body 255, as shown in FIGS. 8-9 and 11.

In one embodiment, the second connection member 220 has a shoulder 221 and a pair of second bending arms 222 vertically extending from two opposite ends of the shoulder 221 to define a space 223 therebetween, as shown in FIG. 10B. The shoulder 221 of the second connection member 220 is placed in the housing 256 of the second hinging body 255 and is pivotally connected to the second hinging body 255 through the holes 257 defined in the body 255 with a connection pin 263, and the free ends of the pair of second bending arms 222 of the second connection member 220 are placed in the housing 252 of the first hinging body 251. The first bending arm 212 of the first connection member 210 is received in the space 223 of the second connection member 220 and pivotally connected to the pair of second bending arms 222 of the second connection member 220 at a middle portion so that the first bending arm 212 of the first connection member 210 and the pair of second bending arms 222 of the second connection member 220 form an X-shape structure, as shown in FIGS. 8-9 and 11.

In one embodiment, each of the shoulders 211 and 221 and the free ends of the bending arms 212 and 222 of the first connection member 210 and the second connection member 220 has an arc-shape surface.

In one embodiment, each of the shoulders 211 and 221 of the first connection member 210 and the second connection member 220 has a width that is substantially same as that of the housings 252 and 256 of the first hinging body 251 and the second hinging body 255. As such, the shoulders 211 and 221 of the first connection member 210 and the second connection member 220 increase the contact area between the first connection member 210, the second connection member 220 and the corresponding pins so as to make the f first connection member 210 and the second connection member 220 more stable when rotating.

In one embodiment, the hinge device 200 further comprises a first position-limiting memberplaced in the housing 252 of the first hinging body 251, and a second position- 230 limiting memberplaced in the housing 256 of the second hinging body 255. In one 240 embodiment, each of the first position-limiting memberand the second position-limiting 230 member 240 has arc-shape surfaces.

The first position-limiting memberhas a body 231 and a tab 232 protruded from the 230 body 231, and an arc-shape surface 233 defined in the body 231 on the two sidesof the tab 232. The arc-shape surface 233 of the first position-limiting memberis corresponding to the free 230 ends of the pair of second bending arms 222 of the second connection member 220. Specifically, the body 231 of the first position-limiting memberis pivotally connected to the first hinging 230 body 251 through the holes 253 defined in the body 255 with a connection pin 261, and the tab of the first position-limiting member 232is received in the space 223 between the pair of 230 second bending arms 222 of the second connection member 220 and pivotally connected to the free ends of the pair of second bending arms 222 of the second connection member 220 through a connection pin 265, as shown in FIGS. 8-9 and 11.

The second position-limiting memberhas a body 241 and a notch 242 cut from the 240 body 241. The notch 242 of the second position-limiting memberis corresponding to the 240 free end of the first bending arm 212 of the first connection member 210. Specifically, the body of the se 241cond position-limiting memberis pivotally connected to the second hinging 240 body 255 through the holes 258 defined in the body 255 with a connection pin 264, and the free end of the first bending arms 212 of the first connection member 210 is receivedin the notch 242 of the second position-limiting memberand pivotally connected to the second position- 240 limiting member 240 through the notch 242 with a connection pin 267, as shown in FIGS. 8-9 and 11.

Since the bottom sides of the first connection member 210, the second connection member 220, the first position-limiting member 230, and the second position-limiting member 240 respectively connected to the first hinged body 251 or the second hinged body 252 through the holes defined in the first hinged body 251 or the second hinged body 252 with the connection pins, the bottom positions of the first connection member 210, the second connection member 220, the first position-limiting member 230, and the second position-limiting member 240 relative to the first hinged body 251 or the second hinged body 252 are fixed during rotations or turning over. As the first hinged body 251 and the second hinged body 252 turn over, the pair of second bending arms 222 of the second connection member 220 pulls the first position-limiting member 230 to move towards the first connecting member 210; the first connection member 210 in turn pulls the second position-limiting member 240 to move towards the shoulder 221 of the second connection member 220 until the first position-limiting member 230 fits the end surface of the first connection member 210 and the second position-limiting member 240 fits the shoulder 221 of the second connection member 220, which turns the first and second hinge bodies 251 and 255 in the maximum angle.

For the exemplary embodiment shown in FIGS. 8-11, by improving the matching structure between the first connection member and the second connection member, the second connection member uses two second connecting arms to clamp the first connecting arm so as to function position limiting, thereby avoiding the shaking phenomenon of the first connection member and the second connection member when rotating, and ensuring the stability of rotations.

For the position-limiting members arranged in the first hinged body and the second hinged body, the swing stroke of the first connection member and the second connection member can be limited by cooperating the first and second position-limiting members with the first connection member and the second connection member, so as to prevent the swing amplitude of the first connection member or the second connection member from exceeding the limit that affects the stable swing between the first hinged body and the second hinged body, thereby ensuring the entire hinged bodies stable and smooth.

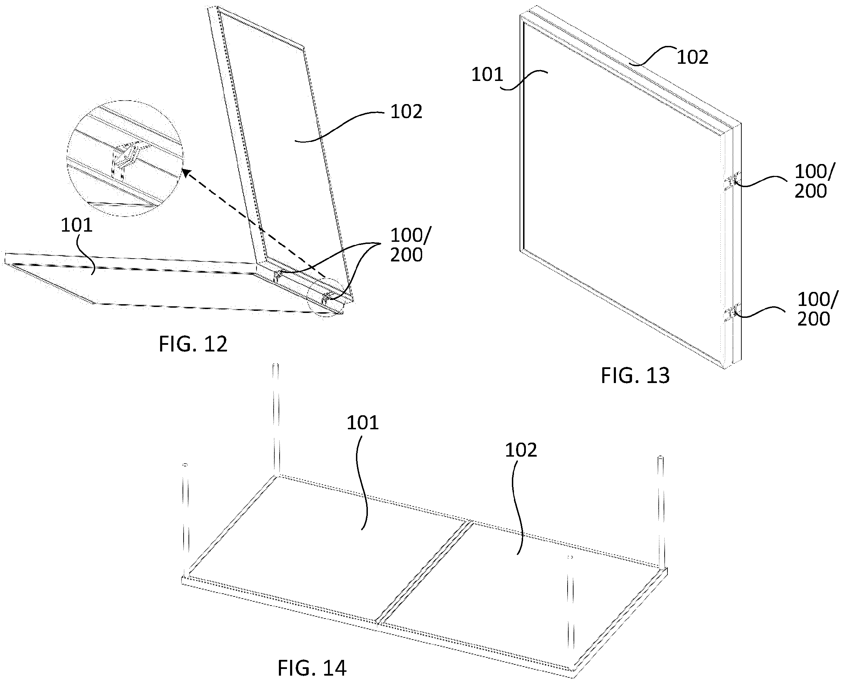

FIGS. 12-14 schematically shows the use of the hinge device 100 or 200 to hinge two objects 101 and 102. The two hinged objects 101 and 102 can rotate relatively to each other in a range of 0-180°. When the two hinged objects 101 and 102 are at 0°, they are folded, which is convenience for transportation and/or storage, as shown in FIG. 13. When the two hinged objects 101 and 102 are at 180°, they are in the flat position for use, as shown in FIG. 14. In the nonlimited exemplary embodiment shown in FIGS. 12-14, the two objects 101 and 102 are two broads of a table. It should be noted that the two objects can be two deck broads and/or two frames of a foldable bed, or any other two solid pieces of furniture.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the invention pertains without departing from its spirit and scope. Accordingly, the scope of the invention is defined by the appended claims rather than the foregoing description and the exemplary embodiments described therein.

## Claims

1. :A hinge device (100) for hinging a first object and a second object, comprising
a first hinging body (151) and a second hinging body (155) configured to connect to the first object and the second object, respectively, wherein each of the first hinging body (151) and the second hinging body (155) has a housing (152, 156) defined therein;
a plurality of first connection members (110) placed in the housings (152, 156) of the first hinging body (151) and the second hinging body (155), wherein each first connection member (110) has a first end (111), a second end (112), and a body (113) defined therebetween, wherein the first end (111) and the second end (112) are bent from the body (113); and
a plurality of second connection members (120) placed in the housings (152, 156) of the first hinging body (151) and the second hinging body (155), wherein each second connection member (120) has a first end (121), a second end (122), and a body (123) defined therebetween,
wherein the first hinging body (151) and the second hinging body (155) are pivotally connected to each other through the plurality of first connection members (110) and the plurality of second connection members (120), such that the first hinging body (151) and the second hinging body (155) are rotatable relative to each other, thereby hinging the first object and the second object.

2. The hinge device of claim 2, wherein the plurality of first connection members (110) comprises two first connection members (110A, 110B), and the plurality of second connection members (120) comprises two second connection members (120A, 120B),
wherein said two first connection members (110A, 110B) are pivotally connected to each other side by side through the bodies of said two first connection members (110A, 110B) such that the first end and the second end of one of said two first connection members (110A, 110B) are respectively aligned with the second end and the first end of the other of said two first connection members (110A, 110B);
wherein the first ends of said two first connection members (110A, 110B) are pivotally connected to the first hinging body (151) and the second hinging body (155), respectively; and
wherein the first ends of said two second connection members (120A, 120B) are pivotally connected to the second ends of said two first connection members (110A, 110B), respectively, the second ends of said two second connection members (120A, 120B) are pivotally connected to the first hinging body (151) and the second hinging body (155), respectively.

3. The hinge device of claim 2, wherein the plurality of first connection members (110) comprises three first connection members (110A, 110B, 110C), and the plurality of second connection members (120) comprises three second connection members (120A, 120B, 120C),
wherein said three first connection members (110A, 110B, 110C) are pivotally connected to each other side by side through the bodies of said three first connection members (110A, 110B, 110C) such that the first end and the second end of the middle first connection member (110B) are respectively aligned with the second ends and the first ends of the two outer first connection members (110A, 110C);
wherein the first end of the middle outer first connection member (110B) is pivotally connected to the first hinging body (151), and the first ends of the two outer first connection members (110A, 110C) are pivotally connected to the second hinging body (155); and
wherein the first end of one (120B) of said three second connection members (120A, 120B, 120C) is pivotally connected between the first ends of the two outer first connection members (110A, 110C), the second end of the one (120B) of said three second connection members (120A, 120B, 120C) is pivotally connected to the first hinging body (151), the second end of the middle first connection member (110B) is pivotally connected between the first ends of the two outer second connection members (120A, 120C), and the second ends of the two outer second connection members (120A, 120C) are pivotally connected to the second hinging body (155), respectively.

4. The hinge device of claim 3, wherein each of the first end (111), the second end (112), and the body (113) of each first connection member (110) has a through hole (111a, 112a, or 113 a) defined therein, wherein each of the first end (121) and the second end (122) of each second connection member (120) has a through hole (121a, or 122a) defined therein.

5. The hinge device of claim 4, wherein the pivotal connections between the first hinging body (151), the second hinging body (155), the plurality of first connection members (110), and the plurality of second connection members (120) through the connection pins (260) are through a plurality of connection pins (260) placing through corresponding holes defined therein.

6. The hinge device of claim 5, wherein further comprising a plurality of cylindrical washers 130 placed between the first hinging body (151), the second hinging body (155), the plurality of first connection members (110), and the plurality of second connection members (120) through the connection pins (260).

7. The hinge device of claim 3, wherein each of the first end and the second end of each of the first connection members (110) and the second connection members (120) has an arc-shape surface.

8. The hinge device of claim 3, wherein the first end (111) and the second end (112) of each first connection member (110) have different heights relative to the body (113), wherein the first end (111) is higher than the second end (112).

9. A hinge device (200) for hinging a first object and a second object, comprising:
a first hinging body (251) and a second hinging body (255) configured to connect to the first object and the second object, respectively, wherein each of the first hinging body (251) and the second hinging body (255) has a housing (252 or 256) defined therein;
a first connection member (210) having a shoulder (211) and a first bending arm (212) vertically extending from a middle of the shoulder (211) to form a T-shape connection piece, wherein the shoulder (211) is placed in the housing (252) of the first hinging body (251) and is pivotally connected to the first hinging body (251), and the free end of the first bending arm (212) is placed in the housing (256) of the second hinging body (255); and
a second connection member (220) having a shoulder (221) and a pair of second bending arms (222) vertically extending from two opposite ends of the shoulder (221) to define a space (223) therebetween, wherein the shoulder (221) is placed in the housing (256) of the second hinging body (255) and is pivotally connected to the second hinging body (255), wherein the free ends of the pair of second bending arms (222) is placed in the housing (252) of the first hinging body (251), wherein the first bending arm (212) is received in the space (223) and pivotally connected to the pair of second bending arms (222) at a middle portion so that the first bending arm (212) and the pair of second bending arms (222) form an X-shape structure,
wherein the first hinging body (251) and the second hinging body (255) are pivotally connected to each other through the first connection member (210) and the second connection member (220), such that the first hinging body (251) and the second hinging body (255) are rotatable relative to each other, thereby hinging the first object and the second object.

10. The hinge device of claim 9, wherein each of the shoulders and the free ends of the bending arms of the first connection member (210) and the second connection member (220) has an arc-shape surface.

11. The hinge device of claim 9, wherein each of the shoulders of the first connection member (210) and the second connection member (220) has a width that is substantially same as that of the housings of the first hinging body (251) and the second hinging body (255).

12. The hinge device of claim 9, further comprising:
a first position-limiting memberplaced in the housing (252) of the first (230) hinging body (251), having a body (231) and a tab (232) protruded from the body (231), wherein the body (231) is pivotally connected to the first hinging body (251), and the tab (232) is received in the space (223) between the pair of second bending arms (222) and pivotally connected to the free ends of the pair of second bending arms; and
a second position-limiting memberplaced in the housing (256) of the (240) second hinging body (255), having a body (241) and a notch (242) cut from the body (241), wherein the body (241) is pivotally connected to the second hinging body (255), and the free end of the first bending arm (212) is received in the notch (242) and pivotally connected the second position-limiting member through the notch )242( (240)

13. The hinge device of claim 9, wherein each of the first position-limiting member (230) and the second position-limiting member (240) has arc-shape surfaces.
